# EUROPÄISCHE PATENTANMELDUNG

(11) **EP 4 794 180 A1**
(43) Veröffentlichungstag der Anmeldung: **19.08.2026**
(21) Anmeldenummer: 25170337.7
(22) Anmeldetag: 14.04.2025
(51) Int. Cl.: H02K 15/33, B23K 26/06, B23K 26/073, B23K 26/24

(54) **VERFAHREN UND VORRICHTUNG ZUM VERSCHWEISSEN VON LEITERENDEN AUS ALUMINIUMWERKSTOFF**

(30) Priorität: 17.02.2025 DE 102025105923
(71) Anmelder: Grob-Werke GmbH & Co. KG, 87719 Mindelheim (DE)
(72) Erfinder: Lehmann, Leo, 87700 Memmingen (DE); Schmid, Valentin, 87719 Mindelheim (DE); Schürer, René, 86415 Mering (DE)
(74) Vertreter: KASTEL Patentanwälte PartG mbB

(57) **Zusammenfassung**

Um ein kompaktes, leichtes und dennoch leistungsstarkes und zuverlässiges Bauteil Bauteil (26) einer elektrischen Maschine - wie insbesondere einen Hairpin-Stator - zu erhalten, schafft die Erfindung ein im Zuge der Großserienherstellung des Bauteils (26) durchzuführendes Leiterendenschweißverfahren zum Verschweißen eines ersten Leiterendes (24.1) aus Aluminium oder einer Aluminiumlegierung mit einem zweiten Leiterende (24.1) aus Aluminium oder einer Aluminiumlegierung, wobei das erste und das zweite Leiterende (24.1, 24.2) nebeneinanderliegen, so dass ihre Endflächen (44) im Wesentlichen in die gleiche Richtung zeigen, wobei das Leiterendenschweißverfahren die Schritte umfasst:
a) Fügen des ersten und zweiten Leiterendes (24.1, 24.2) mittels Schweißens mit einem Laserschweißstrahl (5) derart, dass sich an den Endflächen (44) des ersten und zweiten Leiterendes (24.1, 24.2) eine Schmelzmaterialansammlung (46) ausbildet, und
b) Nachbearbeiten der Schmelzmaterialansammlung (46) durch Abfahren der Schmelzmaterialansammlung (46) einschließlich deren Randbereichen (48) mittels eines Lasernachbearbeitungsstrahls (50) zur Nacherwärmung derart, dass die Oberfläche der Schmelzmaterialansammlung (46) durch eine sich darunter befindliche flüssige Schmelze oberflächenspannungsbedingt abgerundet wird.

## Beschreibung

Die Erfindung betrifft ein Verfahren und eine Vorrichtung zum Verschweißen von Leiterenden aus einem Aluminiumwerkstoff, d.h. aus einem Werkstoff, der überwiegend Aluminium oder eine Aluminiumlegierung enthält.

Einige Ausführungsformen betreffen eine Prozessstrategie zum Verrunden von lasergeschweißten Aluminium-Hairpinverbindungen. Insbesondere findet dies bei Bauteilen von elektrischen Maschinen, wie insbesondere Statoren, Anwendung, die nach der Hairpin-Technologie herzustellen sind. Das Verschweißen kann aber auch bei der Herstellung von Verbindungen von aus Aluminium gebildeten Leitern bei Bauteilen mit Aluminium-Leitern Verwendung finden, die nach einer anderen Technologie hergestellt sind, beispielsweise beim Anschließen von Drähten eines Stators an ein Verschaltelement oder dergleichen; beispielsweise ist bei einigen Ausführungsformen wenigstens einer der zu verschweißenden Leiter ein I-Pin. Allgemein liegt die Erfindung auf dem Gebiet der Fertigung von Aluminiumstatoren.

Zum technologischen Hintergrund und zum Stand der Technik wird auf folgende Literaturstellen verwiesen:
[1] EP 3 797 918 A1
[2] EP 3 865 242 B1
[3] EP 4 104 963 B1
[4] WO 2019/161846 A1
[5] WO 2022/218804 A2
[6] DE 11 2017 007 174 T5
[7] EP 3 292 940 B1
[8] US 2021/0379698 A1
[9] EP 1 175 955 A2
[10] CN 113967791 A
[11] CN 118180605 A
[12] US 11 235 422 B2
[13] US 2012/298638 A1
[14] US 2020/101563 A1
[15] EP 1 175 955 B1

Einige Ausführungsformen von Verfahren und Vorrichtungen gemäß der Erfindung betreffen ein Verschweißen von Drahtenden in der Fertigung von Flachdrahtstatoren (Hairpinstatoren).

Beispielsweise werden Ausführungsformen der Verfahren und Vorrichtungen in einem Hairpin-Stator-Herstellverfahren und in einer Hairpin-Stator-Herstellanlage eingesetzt, wie sie in der Literaturstelle [4] beschrieben und gezeigt ist. Demnach werden bei einigen Ausführungsformen U-förmig gebogene Leiter (sogenannte Hairpins) in ein Blechpaket eingesetzt, und deren Enden werden miteinander verschweißt, um so eine Spulenwicklung des Stators zu bilden. Auch können im Wesentlichen I-förmig gebogene Drähte (I-Pins) als Anschlussdrähte vorgesehen und mit anderen Leiterende verschweißt werden.

Für die Verbindung von Hairpins kommen unter anderem die Fügeverfahren WIG-, Laser- und Elektronenstrahlschweißen in Frage. Aus prozesszeit-, geschwindigkeits-, und kostentechnischen Gründen wird im Markt häufig auf das Laserschweißen gesetzt.

Aus der Literaturstelle [1] sind ein Laserschweißverfahren und eine Laserschweißvorrichtung zum Verschweißen derartiger Leiterenden bekannt. Die Literaturstellen [2] und [3] betreffen vergleichbare Verfahren und Vorrichtungen.

Hairpin-Schweißen im Bereich Kupfer ist Stand der Technik und breit untersucht. Um Gewicht und Kosten zu sparen, entsteht im Markt zunehmend die Anfrage nach Aluminium-Hairpinstatoren.

Für die Fügeaufgabe ergeben sich daraus zahlreiche Herausforderungen, insbesondere was die Größe und Form der angestrebten Schweißung angeht. Ausführungsformen der Erfindung betreffen insbesondere ein Verfahren, die Schweißperlenform möglichst zielführend zu manipulieren.

Die Literaturstelle [5] betrifft ein Verfahren zum Laserschweißen von Aluminium-Stableitern, bei dem zwei Stäbe überlappend angeordnet und mit einem Laserstrahl verschweißt werden. Dabei entsteht eine Schweißraupe, die die Stäbe elektrisch verbindet. Aluminium bietet Vorteile in Bezug auf Kosten und Gewicht gegenüber Kupfer, jedoch ist das Schweißen von Aluminium aufgrund seiner niedrigen Viskosität und Oberflächenspannung herausfordernd. [5] schlägt vor, eine nichtflüssige Oxidschicht während des Schweißprozesses zu nutzen, um die Schmelze in Form zu halten und eine gleichmäßige Schweißraupe zu erzeugen. Diese Oxidschicht verhindert das unkontrollierte Auslaufen der Schmelze und sorgt für eine ausreichende Querschnittsfläche zur Stromleitung. Das Verfahren gemäß [5] sieht vor, den Laserstrahl so zu führen, dass die Oxidschicht nur teilweise geöffnet wird, um die Schmelze zu stabilisieren. Die Schweißkontur wird so gewählt, dass die Oxidschicht intakt bleibt, insbesondere im Mantelbereich der Schweißraupe. Das Verfahren kann in einer sauerstoffhaltigen Atmosphäre durchgeführt werden, um die Bildung der Oxidschicht zu unterstützen. Hierzu wird der Schweißpfad wird bei [5] in einem zentralen Bereich in der Mitte der Schweißperle geführt, um die Oxidschicht nur auf einer möglichst geringen Fläche zu durchbrechen. Ein Aufbrechen der Oxidschicht über das Mindestmaß heraus wird aktiv ausgeschlossen.

Die Literaturstelle [6] beschreibt ein Verfahren zum Verbinden von überlappenden Metallwerkstücken durch Laserstrahlschweißen, um eine glatte Schweißnahtoberfläche zu erzielen. Das Verfahren umfasst das Erzeugen eines Schmelzbereichs im Werkstückstapel durch einen Laserstrahl, der entlang eines primären Strahlwegmusters geführt wird. Nach der Erzeugung des Schmelzbereichs wird die Leistungsdichte des Laserstrahls reduziert, und der Strahl wird entlang eines sekundären Strahlwegmusters bewegt, um die vollständige Erstarrung des Schmelzbereichs zu verzögern und eine glatte Oberfläche zu gewährleisten. Der Schmelzbereich besteht aus Material der geschmolzenen Werkstücke und kann vollständig oder teilweise in den Werkstückstapel eindringen. Bei dem Verfahren nach [6] wird die Oberflächenrauhigkeit minimiert und eine möglichst glatte und ebene Oberfläche erzeugt.

Die Literaturstelle [7] beschreibt ein Verfahren, bei dem einseitig abisolierter Draht verschweißt wird, indem nah am Spalt mit einer größer werdenden kreisförmigen, elliptischen oder rechteckförmigen Bewegung ein Schmelzbad aufgebaut wird, welches entlang der Fügeebene eine Anbindung generiert.

Die Literaturstelle [8] beschreibt ein Verfahren, bei dem eine Spiralform zum Verschweißen von zwei Kupferhairpins verwendet wird.

Die Literaturstelle [9] betrifft ein Verfahren und eine Vorrichtung zur Glättung der Schweißnaht beim Strahlschweißen, insbesondere beim Laserschweißen. Dabei wird die Schweißnaht zwischen zwei Metallkomponenten im Tiefschweißmodus hergestellt. Das Verfahren und die Vorrichtung nach [9] ermöglichen eine kostengünstige und effektive Glättung der Schweißnaht, was insbesondere bei der Herstellung von "Tailored Blanks" und im Automobilbau von Bedeutung ist. Es soll eine möglichst glatte und ebene Oberfläche entstehen.

Die Literaturstelle [10] beschreibt ein Verfahren, bei welchem die ursprüngliche Schweißnaht eines Aluminiumdichtelements wieder aufgeschmolzen wird, um Defekte (Krater, Poren, Hinterschneidungen), welche aus dem Schweißprozess resultieren, wieder aufzuschmelzen und zu entfernen. Die Schweißnaht soll im Hinblick auf verbesserte Dichtwirkung qualitativ verbessert werden.

Bei den Literaturstellen [11] bis [14] geht es darum, bei einem Überlappstoßschweißen die Oberfläche eines geschmolzenen Abschnitts zu ebnen und zu glätten. Ein Verfahren der Nachbehandlung einer Schweißnaht beim Verschweißen von Metallbauteilen ist in [15] beschrieben.

Die Erfindung hat sich zur Aufgabe gestellt, das Verschweißen von überwiegend aus Aluminium gebildeten Leitern prozesstechnisch zu verbessern. Bei einigen Ausführungsformen soll die Qualität der elektrischen Verbindungen und das Risiko von elektrischen Überschlägen und von Ausschuss vermieden werden.

Zum Lösen dieser Aufgabe schafft die Erfindung das Verfahren und die Vorrichtung gemäß den unabhängigen Ansprüchen.

Vorteilhafte Ausgestaltungen sind Gegenstand der Unteransprüche.

Gemäß einem ersten Aspekt schafft die Erfindung ein Leiterendenschweißverfahren, welches insbesondere im Zuge der Herstellung eines Bauteils einer elektrischen Maschine, wie beispielsweise einem Stator, durchgeführt werden soll oder durchgeführt wird. Das Leiterendenschweißverfahren umfasst Verschweißen eines ersten Leiterendes aus Aluminium oder einer Aluminiumlegierung mit einem zweiten Leiterende aus Aluminium oder einer Aluminiumlegierung, wobei das erste und das zweite Leiterende nebeneinanderliegen, so dass ihre Endflächen im Wesentlichen in die gleiche Richtung zeigen. Das Leiterendenschweißverfahren umfasst die Schritte:
a) Fügen des ersten und zweiten Leiterendes mittels Schweißens mit einem Laserschweißstrahl derart, dass sich an den Endflächen des ersten und zweiten Leiterendes eine Schmelzmaterialansammlung ausbildet, und
b) Nachbearbeiten der Schmelzmaterialansammlung durch Abfahren der Schmelzmaterialansammlung einschließlich deren Randbereichen mittels eines Lasernachbearbeitungsstrahls zur Nacherwärmung derart, dass die Oberfläche der Schmelzmaterialansammlung durch eine sich darunter befindliche flüssige Schmelze oberflächenspannungsbedingt abgerundet wird.

Bei einigen Ausführungsformen umfasst Schritt a) den Schritt:
a1) Bilden einer Schweißperle als Schmelzmaterialansammlung, die sich über die Endflächen des ersten und zweiten Leiterendes erstreckt.

Bei einigen Ausführungsformen umfasst Schritt a) den Schritt:
a2) Bilden einer Schweißnaht als Schmelzmaterialansammlung im Übergangsbereich zwischen dem ersten und zweiten Leiterende.

Bei einigen Ausführungsformen umfasst Schritt a) den Schritt:
a3) Abfahren eines geschlossenen Schweißpfads, der sich über die Endflächen des ersten und zweiten Leiterendes erstreckt, mittels des Laserschweißstrahls.

Bei einigen Ausführungsformen umfasst Schritt a) den Schritt:
a4) Abfahren eines geteilten Schweißpfads, von dem ein Teil sich auf der Endfläche des ersten Leiterendes und ein anderer Teil sich auf der Endfläche des zweiten Leiterendes befindet, mittels des Laserschweißstrahls.
a5) Abfahren eines konzentrierten Schweißpfads entlang eines Spalts zwischen den Endflächen des ersten und zweiten Leiterendes mittels des Laserschweißstrahls.

Bei einigen Ausführungsformen umfasst Schritt a) den Schritt:
a6) Abfahren eines elliptischen oder rechteckförmigen Schweißpfads.

Bei einigen Ausführungsformen umfasst Schritt a) den Schritt:
a7) Abfahren eines linienförmigen Schweißpfads.

Bei einigen Ausführungsformen umfasst Schritt a) den Schritt:
a8) Abfahren eines oszillierenden Schweißpfads.

Bei einigen Ausführungsformen umfasst Schritt b) den Schritt:
b1a) gezieltes Führen eines Fokusbereichs des Lasernachbearbeitungsstrahls über die Oberfläche der Schmelzmaterialansammlung, um eine Oxidschicht aufzubrechen und/oder zu erweichen, so dass die darunterliegende Schmelze sich in eine oberflächenspannungsbedingte Verrundung zurückzubilden kann.

Bei einigen Ausführungsformen umfasst Schritt b) den Schritt:
b1b) Verlängerung eines Erstarrungsprozesses der Schmelzmaterialansammlung durch die Nachbearbeitung.

Bei einigen Ausführungsformen umfasst Schritt b) den Schritt:
b1c) Rückbilden von Vorsprüngen und/oder von Schneidgraten und Einarbeiten des Materials davon in eine abgerundete Form der Schmelzmaterialansammlung.

Bei einigen Ausführungsformen umfasst Schritt b) den Schritt:
b1d) Abfahren der Schmelzmaterialansammlung mittels des Lasernachbearbeitungsstrahls auf einem Nachbearbeitungspfad, der einen geraden, rechteckförmigen, bogenförmigen, elliptischen, spiralförmigen, oszillierenden Verlauf, die Form einer Beschriftung oder einen aus einer Kombination einer oder mehrerer der vorerwähnten Verläufe und Formen gebildeten Verlauf hat.

Bei einigen Ausführungsformen umfasst Schritt b) den Schritt:
b1e) Verrundung der Schweißung über die gesamte nach oben gerichtete Fläche der Schweißmaterialansammlung, insbesondere einer Schweißperle, insbesondere im Randbereich der Schweißmaterialansammlung.

Bei einigen Ausführungsformen umfasst Schritt b) den Schritt:
b1f) Ausbilden einer im Wesentlichen kugelförmigen oder ellipsoiden Schweißperle aus der Schmelzmaterialansammlung.

Bei einigen Ausführungsformen umfasst Schritt b) den Schritt:
b1g) Ausbilden eines kanten- und eckenverrundeten Quaders, insbesondere bei konzentrierten Schweißpfaden.

Bei einigen Ausführungsformen umfasst Schritt b) den Schritt:
b2a) Verwenden einer Laserleistung für den Lasernachbearbeitungsstrahl, die geringer als die Laserleistung des Laserschweißstrahls ist.

Bei einigen Ausführungsformen umfasst Schritt b) den Schritt:
b2b) Verwenden einer Fokusgeschwindigkeit für den Lasernachbearbeitungsstrahl, die höher als die Fokusgeschwindigkeit des Laserschweißstrahls ist.

Bei einigen Ausführungsformen umfasst Schritt b) den Schritt:
b2c) Erzeugen des Lasernachbearbeitungsstrahls mit dem Laser, mit dem im Schritt a) der Laserschweißstrahl erzeugt worden ist.

Bei einigen Ausführungsformen umfasst Schritt b) den Schritt:
b2d) Erzeugen des Lasernachbearbeitungsstrahls mit einer Laserleistung von 0,2 bis 10kW, bevorzugt 0,5 bis 5kW.

Bei einigen Ausführungsformen umfasst Schritt b) den Schritt:
b2e) Erzeugen des Lasernachbearbeitungsstrahls mit einer gleichbleibenden Laserleistung oder mit einer zu Beginn ansteigenden und/oder zum Ende abfallenden Laserleistung.

Bei einigen Ausführungsformen umfasst Schritt b) den Schritt:
b2f) Abfahren der Schmelzmaterialansammlung mit einer Fokusgeschwindigkeit im Bereich von einschließlich 50 bis 3000 mm/s, bevorzugt einschließlich 300 bis 1500mm/s.

Bei einigen Ausführungsformen umfasst Schritt b) den Schritt:
b3a) Eintragen einer Energie pro Strecke mit dem Lasernachbearbeitungsstrahl, die im Vergleich zum Eintrag der Energie pro Strecke mit dem Laserschweißstrahl um mindestens den Faktor zwei geringer ist.

Bei einigen Ausführungsformen umfasst Schritt b) den Schritt:
b3b) Eintragen einer Energie pro Strecke mit dem Lasernachbearbeitungsstrahl im Bereich von einschließlich 0,5 bis 5 J/mm, bevorzugt im Bereich von einschließlich 1,5 bis 3,5 J/mm.

Bei einigen Ausführungsformen umfasst Schritt b) den Schritt:
b3c) Abfahren der Schmelzmaterialansammlung mit defokusiertem Lasernachbearbeitungsstrahl in einer Fokuslage zwischen einschließlich -20 und +20mm, bevorzugt in der Fokusebene.

Bei einigen Ausführungsformen umfasst Schritt b) den Schritt:
b4a) Abfahren der Schmelzmaterialansammlung auf einem Nacharbeitspfad, dessen äußere Konturgröße zwischen dem einschließlich 0,5fachen bis 1,5fachen, bevorzugt zwischen einschließlich dem 0,8fachen bis 1,2fachen der Außenmaße des Paares aus erstem und zweitem Leiterende beträgt.

Bei einigen Ausführungsformen umfasst Schritt b) den Schritt:
b4b) Abfahren der Schmelzmaterialansammlung auf einem Nacharbeitspfad, dessen äußere Konturgröße durch die Größe einer Schmelzperle als Schmelzmaterialansammlung begrenzt wird.

Bei einigen Ausführungsformen umfasst Schritt b) den Schritt:
b4c) Erzeugen einer verrundeten Oberfläche für eine Schweißnaht im Übergangsbereich des ersten und zweiten Leiterendes als Schmelzmaterialansammlung, wobei für die maximale Ausdehnung d_{V} der verrundeten Oberfläche gilt:
d_{V} = d_{P}-d_{F}, wobei d_{P} die Ausdehnung des Paars aus erstem und zweitem Leiterende und d_{F} die Ausdehnung des Fokus des Lasernachbearbeitungsstrahls ist.

Bei einigen Ausführungsformen umfasst Schritt b) den Schritt:
b4d) Erzeugen einer verrundeten Oberfläche einer Schweißperle als Schmelzmaterialansammlung, wobei für die maximale Ausdehnung d_{V} der verrundeten Oberfläche gilt:
d_{V} = d_{S}-d_{F}, wobei d_{S} die Ausdehnung der Schweißperle und d_{F} die Ausdehnung des Fokus des Lasernachbearbeitungsstrahls ist.

Bei einigen Ausführungsformen umfasst Schritt b) den Schritt:
b4e) Erzeugen einer rechteckigen oder einer elliptischen abgerundeten Oberfläche an einem Leiterendenpaar, dessen Endflächen zusammen eine rechteckige Form ergeben.

Bei einigen Ausführungsformen umfasst Schritt b) den Schritt:
b4f) kontinuierliches oder gepulstes Einbringen der Nachbearbeitungsenergie.

Bei einigen Ausführungsformen umfasst Schritt b) den Schritt:
b4g) Verwenden einer statischen oder dynamischen Strahlformung, mit der der Laserstrahl zum Nachbearbeiten aufgeteilt wird, wie insbesondere in Kern und Ring.

Bei einigen Ausführungsformen erfolgt Schritt b) mit oder ohne Unterbrechung nach Schritt a) in noch flüssiger Schmelze.

Bei einigen Ausführungsformen findet der Schweißprozess ohne Schutzgas, an Umgebungsluft statt.

Gemäß einem weiteren Aspekt schafft die Erfindung ein Herstellverfahren zum Herstellen eines Hairpin-Stators, umfassend:
Bereitstellen eines Statorblechpakets mit darin eingefügten Hairpin-Leiterabschnitten, deren Leiterenden paarweise nebeneinander angeordnet sind, um durch Verschweißen der Leiterenden eine Spulenwicklung des Hairpin-Stators zu bilden und
Verschweißen der Leiterenden durch Durchführen des Leiterendenschweißverfahrens nach einer der voranstehenden Ausgestaltungen.

Gemäß einem weiteren Aspekt schafft die Erfindung eine Leiterendenschweißvorrichtung zum Verschweißen eines ersten Leiterendes aus Aluminium oder einer Aluminiumlegierung mit einem zweiten Leiterende aus Aluminium oder einer Aluminiumlegierung, wobei das erste und das zweite Leiterende nebeneinanderliegen, so dass ihre Endflächen im Wesentlichen in die gleiche Richtung zeigen, wobei die Leiterendenschweißvorrichtung wenigstens eine Laserstrahlquelle zum gezielten Richten eines Laserstrahls auf die Endflächen des ersten und zweiten Leiterendes und eine (computerimplementierte) Steuerung (insbesondere mit Speicher und Prozessor) aufweist, die dazu ausgebildet ist, die Leiterendenschweißvorrichtung zum Durchführen des Verfahrens nach einer der voranstehenden Ausgestaltungen zu steuern.

Gemäß einem weiteren Aspekt schafft die Erfindung eine Herstellanlage zur industriellen Serienherstellung von Hairpin-Statoren, umfassend eine solche Leiterendenschweißvorrichtung.

Gemäß einem weiteren Aspekt schafft die Erfindung ein Computerprogramm, umfassend Anweisungen, die eine Leiterendenschweißvorrichtung gemäß einer der zuvor erläuterten Ausführungsformen dazu veranlassen, das Leiterendenschweißverfahren nach einer der oben erläuterten Ausgestaltungen durchzuführen, oder die eine Herstellanlage gemäß einer der zuvor erläuterten Ausgestaltungen dazu veranlassen, das oben erläuterte Herstellverfahren durchzuführen.

Im Folgenden werden besondere Eigenschaften und Vorteile einiger Ausführungsformen der Erfindung beschrieben.

Bei der Schweißung von Aluminium-Hairpins wird die Perlenform maßgeblich von der Oxidschicht auf der Aluminiumoberfläche beeinflusst. Reines Aluminium bildet im Kontakt mit Luft eine dünne Oxidschicht, auch natürliche Oxidschicht genannt, die den darunter liegenden Werkstoff vor weiterer Korrosion schützt. Diese Oxidschicht könnte durch chemische oder auch thermische Behandlung zwar dicker gemacht, jedoch in sauerstoffhaltigen Umgebungen nie vermieden werden.

Im Schweißprozess von Aluminium entsteht weiteres Aluminiumoxid, welches durch die Reaktion von Umgebungssauerstoff mit schmelzflüssigem Aluminium entsteht. Durch den Einsatz von Schutzgas oder Vakuum kann dieses zusätzliche Oxid vermieden werden, die natürliche Oxidschicht ist jedoch auch in inerter Umgebung vorhanden.

Die Oxidschicht lagert sich im Schweißprozess als feste "Haut" auf der Oberfläche des Schmelzbads ab. Durch die Dynamik der darunterliegenden Schmelze, die durch das gezielte Führen der Schweißzone (Im Fall von Laser: Keyhole) entsteht, formen sich unerwünschte Freiformen wie Ecken, Wellen, Nasen, Überhänge, Kavitäten, etc. aus. Diese können sich durch die solide Oberflächenschicht nicht selbstständig zurückbilden.

Diese Anomalien sind aus folgenden Gründen unerwünscht:
- Risko der Entstehung eines elektrischen Kurzschlusses zur Nachbarschweißung durch "Nasen".
- unklare Abgrenzung zu tatsächlichen Schweißfehlern, die durch eine zusätzliche Sensorik unter anderem optisch erkannt und abgegrenzt werden sollen.
- kleine Eckradien der entstandenen Freiformen würden zu reduzierter Schichtdicke in nachfolgenden Beschichtungsverfahren führen.

Für das Produkt selbst (Bauteil einer elektrischen Maschine wie insbesondere Stator) ist das Risiko von zu kleinen Luft- und Kriechstrecken, sprich zu kleine Abstände zwischen zwei mit einer Potentialdifferenz beaufschlagten Wicklungselemente, kritisch. Maßgeblich für diese Abstände sind die Überhänge der Schweißperle relativ zum ursprünglichen abisolierten Rechteckleiter. Formabweichungen wie Nasen, Ecken und erstarrte Spritzer verringern diese Abstände potenziell. Mit Ausführungsformen der Erfindung lassen sich solche Formabweichungen im Schweißprozess wieder zu einer möglichst kugelförmigen Perle verrunden.

Bei einigen Ausführungsformen der Erfindung handelt es sich um eine Nachbearbeitungsstrategie die nachfolgend auf einen Hauptschweißprozess aufgebaut wird.

Durch gezieltes Führen der Schweißzone über die Oberfläche der Schweißnaht wird die Oxidschicht durch die direkte Interaktion des Keyholes aufgebrochen/ erweicht. Die darunterliegende Schmelze bekommt dadurch die Chance, sich in eine natürliche, oberflächenspannungsbedingte Verrundung zurückzubilden. Der Erstarrungsprozess wird durch die Nachbearbeitung verlängert.

Vorprozessbedingte Anomalien wie die oben beschriebenen Freiformen, aber auch Schneidgrat werden vom Prozess erfasst und in die Perle eingearbeitet. Das gezielte Führen kann dabei in unterschiedlichsten Formen von Schweißpfaden erfolgen wie beispielsweise: gerade, rechteckförmig, bogenförmig, elliptisch, spiralförmig, alle Formen von Oszillationsbewegungen oder auch in Form einer Beschriftung.

Für das Nachwärmen/ Oxidschichtbrechen wird vorzugsweise eine geringere Laserleistung und/oder höhere Fokusgeschwindigkeiten verwendet. Die Laserleistung kann sich zwischen 0,2 und 10kW, bevorzugt 0,5 bis 5kW betragen und sowohl statisch als auch mit einer Rampenstrategie angewendet werden. Die Fokusgeschwindigkeit kann zwischen 50 und 3000 mm/s betragen, bevorzugt 300 bis 1500mm/s. Maßgebliche Größe für den Energieeintrag ist die Steckenenergie. Diese ist im Vergleich zur Maximalleistung des Hauptprozesses bei einigen Ausführungsformen der Erfindung mindestens um den Faktor 2 geringer und beträgt zwischen 0,5 und 5 J/mm, bevorzugt zwischen 1,5 und 3,5 J/mm. Die Nachbearbeitung kann auch defokusiert in einer Fokuslage zwischen -20 und +20mm, bevorzugt in der Fokusebene, angewendet werden. Die äußere Konturgröße des Nacharbeitspfads beträgt bei einigen Ausführungsformen zwischen dem 0,5- und 1,5-fachem der Außenmaße des Pinpaares, bevorzugt 0,8 bis 1,2-fach. Die äußere Konturgröße wird begrenzt durch die Größe der Schweißperle nach dem Hauptschweißvorgang. Bei einer lokalen Schweißung in der Fügeebene ("Spaltschweißung") ergibt sich das maximale Limit für die Verrundungskontur durch dVerrungdunskontur=dPinpaar - dFokus. Für Hauptschweißvorgänge, die eine Perle ausbilden, lässt sich dieses Limit durch dVerrungdunskontur=dPerle - dFokus berechnen. Für rechteckige Pinpaare ergeben sich abhängig der jeweiligen Aspektverhältnisse rechteckige bzw. elliptische Verrundungskonturen. Die Energie kann sowohl gepulst als auch durch einen kontinuierlichen Eintrag eingebracht werden. Es kann Strahlformung (Aufteilung der Laserleistung in z.B. Kern und Ring) statisch und dynamisch zum Einsatz kommen.

Der vorgelagerte, eigentliche Fügeprozess zwischen den beiden Hairpins kann über einen geschlossenen Schweißpfad, einen geteilten Schweißpfad oder auch einen konzentrierten Schweißpfad erfolgen. Das nachgelagerte Brechen der Oxidschicht durch den verlängerten Schweißprozess erfolgt bei einigen Ausführungsformen mit oder ohne Unterbrechung in noch flüssiger Schmelze.

Bisherige Lösungsansätze zum Schweißen von Stromleitern aus Aluminium beschreiben den Hauptprozess des Verbindens der beiden Leitungsenden. Dabei wird die feste Form der Oxidschicht möglichst wenig verletzt genutzt, um die Schmelze bei der Bildung der Schweißperle möglichst schlank zusammenzuhalten. Der Ansatz des Nachbearbeitungsprozesses baut bei Ausführungsformen der Erfindung auf einem vorgelagerten Fügeprozess auf. Ohne die Nachbearbeitung zeigen sich Fehlerbilder in unterschiedlich starker Ausprägung. In seltenen Fällen haben diese einen Einfluss auf die Funktion des Bauteils oder führen zu Unschärfen in Folgeprozessen. Aufgrund der Vielzahl an Schweißverbindungen pro Bauteil soll gewährleistet werden, dass diese Fehlerbilder möglichst nicht auf dem Bauteil verbleiben.

In einigen Literaturstellen wird ein ähnliches Vorgehen zur Ausbesserung von nahtinternen Defekten bei Stumpfstoßschweißungen auf anderen technischen Gebieten beschrieben. Zum Verbindungstyp Aluminium-Hairpin bestehen nur wenige Veröffentlichungen. Literaturstellen, die sich mit der Nachbearbeitung der Oberflächenbeschaffenheit befassen, beziehen sich auf Überlappverbindungen o.ä. Diese haben alle das Ziel, eine Schweißnaht hinsichtlich ihrer Oberflächenrauigkeit in Richtung der Zielform einer perfekten Ebene zu manipulieren. Im Gegensatz zu den Literaturstellen zur Nachbearbeitung von Stumpfschweißungen haben Ausführungsformen des Leiterendenschweißverfahrens andere technische Effekte. Bei den Ausführungsformen des Leiterendenschweißverfahrens wie hier beschrieben, geht es darum, Luft- und Kriechströme bei nahe zueinander liegenden Verbindungen von Leitern zu vermeiden. Dies gelingt am besten, wenn man die Schweißperle möglichst gut verrundet, während bei Nachbearbeiten von Stumpfstoßschweißungen oder von Schweißungen von aufeinanderliegenden Platten dagegen eine glatte, möglichst ebene Oberfläche gewünscht ist und somit gerade keine Verrundung.

Mechanische Nachbearbeitungsverfahren wie zum Beispiel Feilen sind für die Oberflächenverbesserung ebenfalls denkbar, jedoch nicht für automatisierte Prozesse praktikabel.

Ausführungsbeispiele der Erfindung werden hiernach anhand der beigefügten Zeichnungen näher erläutert. Darin zeigt:
- Fig.1: eine schematische Seitenansicht auf eine Schweißanordnung mit einem beispielsweise als Blechpaket eines Stators ausgebildeten Bauteil, aus dem Leiterenden in einer Leiterendenanordnung hervorstehen, und einer beispielhaften Ausführungsform einer Leiterendenschweißvorrichtung zum Verschweißen der Leiterenden;
- Fig. 2: eine axiale Draufsicht auf einen Teilausschnitt des Blechpakets, wobei die Lage von zu verschweißenden Leiterendenpaaren der Leiterendenanordnung mit deren Abstand d_tan in radialer Richtung und d_rad in Umfangsrichtung angedeutet sind;
- Fig. 3: eine perspektivische Darstellung des Bauteils mit Leiterendenanordnung und bereits verschweißter Leiterendenpaare, wobei ebenfalls deren Abstand d_tan in radialer Richtung und d_rad in Umfangsrichtung dargestellt ist;
- Fig. 4: eine vereinfachte Darstellung eines ersten Hairpins und eines zweiten Hairpins als Beispiele für Leiter, deren Leiterenden miteinander zu verschweißen sind;
- Fig. 5: eine Draufsicht auf die Endflächen von miteinander zu verschweißenden Leiterenden eines Leiterendenpaares, beispielsweise der Enden des ersten und zweiten Hairpins von Fig. 4, mit der Darstellung einer ersten Ausführung eines geschlossenen Schweißpfades, wobei der Schweißpfad ein geschlossener Schweißpfad ist;
- Fig. 6: eine Draufsicht auf die Endflächen des Leiterendenpaares mit der Darstellung einer zweiten Ausführung des Schweißpfades, wobei der Schweißpfad ein geteilter Schweißpfad ist;
- Fig. 7: eine Draufsicht auf die Endflächen des Leiterendenpaares mit der Darstellung einer dritten Ausführung des Schweißpfades, wobei der Schweißpfad ein konzentrierter Schweißpfad ist;
- Fig. 8: eine Draufsicht auf die Endflächen von miteinander zu verschweißenden Leiterenden eines Leiterendenpaares, beispielsweise der Enden des ersten und zweiten Hairpins von Fig. 4 vor dem Verschweißen;
- Fig. 9: eine Draufsicht auf die Endflächen des Leiterendenpaares von Fig. 8 mit der Darstellung eines Fügeschritts des Schweißverfahrens, wobei eine praktische Durchführung der ersten Ausführung des Schweißpfades angedeutet ist;
- Fig. 10: eine Draufsicht auf die Endflächen des Leiterendenpaares von Fig. 8 mit der Darstellung eines Fügeschritts des Schweißverfahrens, wobei eine praktische Durchführung einer Variante der ersten Ausführung des Schweißpfades angedeutet ist;
- Fig. 11: eine Draufsicht auf die Endflächen des Leiterendenpaares von Fig. 8 mit der Darstellung eines Fügeschritts des Schweißverfahrens, wobei eine praktische Durchführung einer Variante der zweiten Ausführung des Schweißpfades angedeutet ist;
- Fig. 12: eine Draufsicht auf die Endflächen des Leiterendenpaares von Fig. 8 mit der Darstellung eines Fügeschritts des Schweißverfahrens, wobei eine praktische Durchführung der dritten Ausführung des Schweißpfades angedeutet ist;
- Fig. 13: eine Draufsicht auf die Endflächen des Leiterendenpaares mit der Darstellung einer ersten Ausführung eines Schritts zum Nachbearbeiten einer beim Fügen erzeugten Schmelzmaterialansammlung;
- Fig. 14: eine Draufsicht auf die Endflächen des Leiterendenpaares mit der Darstellung einer zweiten Ausführung eines Schritts zum Nachbearbeiten einer beim Fügen erzeugten Schmelzmaterialansammlung;
- Fig. 15: eine perspektivische Darstellung des gefügten Leiterendenpaares von Fig. 13 beim Nachbearbeiten;
- Fig. 16: eine perspektivische Darstellung des gefügten Leiterendenpaares von Fig. 14 beim Nachbearbeiten;
- Fig. 17: eine Fotografie, die ein durch Laserschweißen gefügtes Leiterendenpaar aus Aluminium-Leitern ohne Nachbearbeitung zeigt;
- Fig. 18: eine Fotografie des Leiterendenpaars von Fig. 17 nach dem Nachbearbeiten;
- Fig. 19 bis 22: Fotografien von durch Laserschweißen gefügter Leiterendenpaare aus Aluminium mit unterschiedlichen funktionskritischen Schweißfehlern.

Im Folgenden werden anhand der beigefügten Zeichnungen Ausführungsbeispiele für ein Leiterendenschweißverfahren erläutert, welches im Zuge der Herstellung - Großserienfertigung - eines Bauteils 26 einer elektrischen Maschine durchgeführt wird. Bei einigen Ausführungsbeispielen wird das Leiterendenschweißverfahren mittels einer Leiterendenschweißvorrichtung 22 durchgeführt, die Teil einer Herstellanlage zur Herstellung eines Hairpin-Stators 8 ist. Der allgemeine Aufbau einer solchen Herstellanlage und das Herstellverfahren zur Herstellung eines Hairpin-Stators 8 sind beispielsweise aus der Literaturstelle [4], die durch Bezugnahme inkorporiert wird, bekannt und werden daher hier nicht im Einzelnen beschrieben. Abweichend von dem in der Literaturstelle [4] beschriebenen Herstellverfahren werden allerdings die Drähte und die daraus gebildeten Leiter, insbesondere in Form von Hairpins 17, 17.1, 17.2 und I-Pins, nicht aus Kupfer, sondern aus einem Aluminiumwerkstoff, also aus Aluminium, einer Aluminiumlegierung oder einem Metall, das überwiegend Aluminium oder eine Aluminiumlegierung enthält, hergestellt.

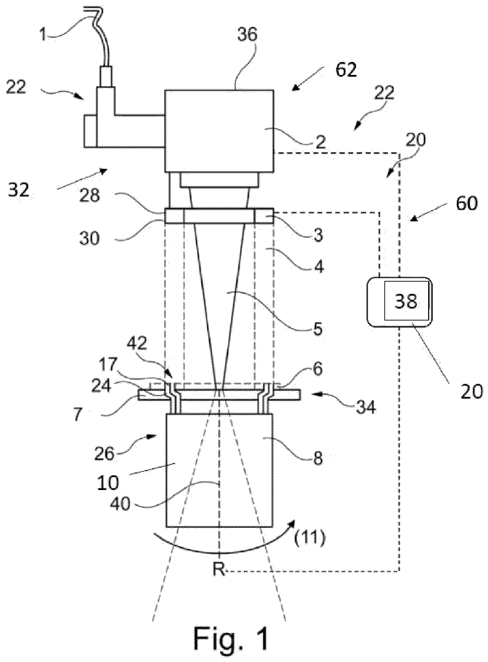

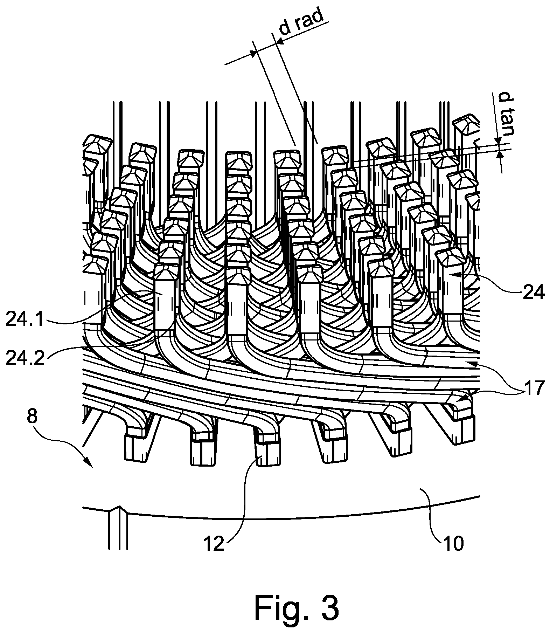

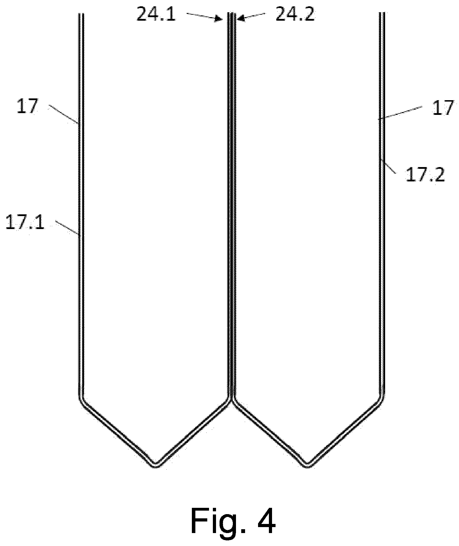

Ein Beispiel für die als Laserschweißvorrichtung ausgebildete Leiterendenschweißvorrichtung 22, mittels der das Leiterendenschweißverfahren bei einigen Ausführungsformen durchgeführt wird, ist in Fig. 1 dargestellt. Die Fig. 3 und 4 zeigen weitere Darstellungen der Leiterendenanordnung 42, wobei Abstände d_tan, d_rad der jeweils zu verschweißenden Leiterendenpaare angedeutet sind.

Bei der in Fig. 1 dargestellten Ausführung weist die Leiterendenschweißvorrichtung 22 eine Positionsbestimmungseinrichtung 60 zum Bestimmen der Position von vorbestimmten zu verschweißenden Leiterenden 24, 24.1, 24.2 der Leiterendenanordnung 42 auf. Die Positionsbestimmungseinrichtung 60 weist eine berührungslose, beispielsweise kamerabasierte, Erfassungseinrichtung 30 zum Erfassen der Position und eine computerimplementierte Auswerteinrichtung 38 auf. Weiter weist die Leiterendenschweißvorrichtung 22 eine Lasereinrichtung 32 auf, die einen Laserstrahl 5 auf die zu verschweißenden Leiterenden 24, 24.1, 24.2 richtet.

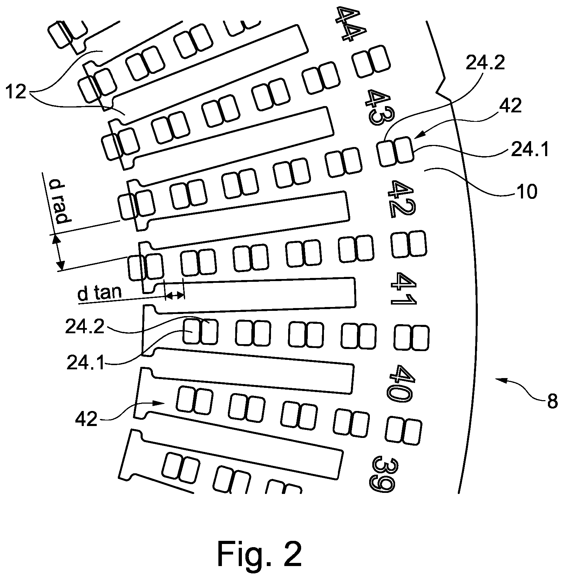

Insbesondere ist in Fig. 1 und 2 ein Ausführungsbeispiel für eine Schweißanordnung 20 dargestellt, die die Laserschweißvorrichtung 22 zum Verschweißen von Leiterenden 24, 24.1, 24.2, die aus dem Bauteil 26 vorstehen, sowie das zu bearbeitende Bauteil 26 aufweist.

Bei einem bevorzugten Ausführungsbeispiel ist das Bauteil 26 ein Stator 8 eines als Fahrmotor für Kraftfahrzeuge zu verwendenden Elektromotors. Der Stator 8 wird gemäß einem Herstellverfahren, wie es im Einzelnen in der Literaturstelle [4] beschrieben und gezeigt ist, hergestellt. Die hier beschriebene Leiterendenschweißvorrichtung 22 dient zum Durchführen des in dieser Literaturstelle beschriebenen Schweißvorganges zum Verbinden von Leiterenden 24, die aus dem Stator 8 vorstehen, um so Spulenwicklungen des Stators 8 zu bilden. Die Leiterenden 24, 24.1, 24.2 sind insbesondere die freien Enden von Hairpins 17, 17.1, 17.2 welche in Nuten 12 eines Blechpakets 10 des Stators 8.1 eingeführt worden sind. Eine vereinfachte Darstellung der zu verbindenden Hairpins 17, 17.1, 17.2 ist in Fig. 4 dargestellt. Entsprechend werden die Leiterenden 24, 24.1, 24.2 auch als Pins bezeichnet, ein Paar von miteinander zu verschweißenden Leiterenden 24, 24.1, 24.2 wird auch als Pinpaar bezeichnet.

Die Leiterendenschweißvorrichtung 22 weist eine Beleuchtungseinrichtung 28, die optische Erkennungseinrichtung 30, die Lasereinrichtung 32 und eine Halterung 34 auf. Die Beleuchtungseinrichtung 28 dient zum Beleuchten von Leiterenden 24, 24.1, 24.2. Sie kann beispielsweise ein Ringlicht 3 mit einem Lichtkegel 4 aufweisen. Die berührungslose Erkennungseinrichtung 30 ist bei den dargestellten Ausführungsbeispielen als optische Erkennungseinrichtung dazu ausgebildet, durch die Beleuchtungseinrichtung 28 beleuchtete Leiterenden 24, 24.1, 24.2 in einer Leiterendenanordnung 42 zu erkennen und deren Position in einem Koordinatensystem zu erfassen. Bei den dargestellten Ausführungsformen ist die Lasereinrichtung 32 dazu ausgebildet, einen Laserstrahl 5, 50 abhängig von der erfassten Position auf die Leiterenden 24, 24.1, 24.2 zu richten, um so das Verschweißen der Leiterenden 24 durchzuführen. Bei einigen Ausführungen wird Laserlicht von einem nicht dargestellten Laser durch ein Lichtleitkabel 1 zu einer Laseroptik 2 geleitet. Zum Lenken des Laserstrahls 5, 50 weist die Lasereinrichtung 32 eine Scaneinrichtung 36 auf.

Die Halterung 34 dient zum Halten des Bauteils 26 und der Leiterenden 24 während des Schweißvorganges. Hierzu weist die Halterung 34 als Schweißschablone eine Spannvorrichtung 7 auf. Die Halterung 34 kann relativ zu der Lasereinrichtung 32 beispielsweise durch Rotation um eine Achse 40 in eine Rotationsrichtung 11 beweglich sein, um den Laserstrahl 5 und Leiterenden 24 relativ zueinander zu positionieren, oder auch stationär ausgebildet sein, wobei die relative Positionierung allein durch Richten des Laserstrahls 5 erfolgt. Weiter wird bei einigen Ausführungen an der Leiterendenanordnung 42 ein Luftvorhang erzeugt. Ein Luftvorhang (auch Crossjet genannt) schützt die Optikkomponente vor Schweißspritzer. Bei einigen Ausführungsformen ist weiter eine Absaugung 6 vorgesehen, um Rauchgase oder dergleichen abzusaugen.

Die Auswerteeinrichtung 38 kann Teil einer computerimplementierten Steuerung 20 der Laserschweißvorrichtung 22 oder der Herstellanlage sein, wobei die Steuerung 20 einen Prozessor und einen Speicher aufweist, in dem wenigstens ein Computerprogramm mit Steueranweisungen gespeichert ist. Insbesondere weist das Computerprogramm Anweisungen auf, die die Laserschweißvorrichtung 22 dazu veranlassen, ein Schweißverfahren durchzuführen, von dem bevorzugte Ausführungsformen im Folgenden näher erläutert werden.

Fig. 4 zeigt eine schematische Darstellung eines ersten und zweiten Hairpins 17.1, 17.2, deren Enden Beispiele für die mit dem Laserschweißverfahren zu verschweißenden Leiterenden 24 darstellen. Die Hairpins 17.1, 17.2 sind aus einem Aluminiummaterial gebildet.

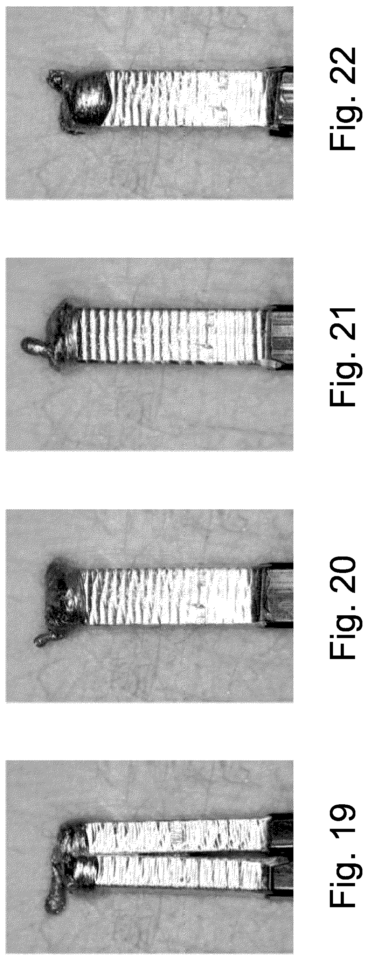

Beim Verschweißen von Leiterenden 24, 24.1, 24.2 aus Aluminium gibt es im Vergleich zu Leiterenden aus Kupfer eine erhöhte Tendenz zu Schweißfehlern, von denen Beispiele in den Fig. 19 bis 22 dargestellt sind.

Wie man Fig. 2 und 3 entnehmen kann, haben bei den hier in Rede stehenden Bauteilen 26 die zu verschweißenden Leiterenden 24, 24.1, 24.2, beispielsweise Leiterendenpaare, einen relativ geringen Abstand d_tan und d_rad in radialer Richtung und in Umfangsrichtung zueinander. Schweißfehler der in den Fig. 19 bis 22 gezeigten Art können daher in einigen wenigen Fällen dazu führen, dass es Funktionsstörungen in der Spulenwicklung gibt oder das Gesamtbauteil die Bauraumbeschränkungen übersteigt.

Wie in Fig. 2 und 3 gezeigt, ist der Bauraum auf der geweiteten und geschränkten Seite eines Hairpin-Stators 8 sehr begrenzt. Die Abstände d_rad und d_tan zwischen den einzelnen Schweißpunkten sind so groß wie nötig und so klein wie möglich gewählt. Die physikalische Randbedingung der limitieren Luft- und Kriechstrecke ist insbesondere bei Statordesigns, bei der kein zusätzlicher Beschichtungsprozess folgt, maßgeblich für die Funktion des mit dem Stator 8 gebildeten Antriebs. Perlenüberhänge lassen sich bei Perlenschweißungen nicht gänzlich vermeiden. Formabweichungen wie Nasen, Ecken und erstarrte Spritzer - siehe Fig. 19 bis 22 - verringern diese Abstände potenziell. Im Folgenden werden Ausführungsformen eines Laserschweißverfahrens beschrieben, mit denen eventuelle Formabweichungen im Schweißprozess wieder zu einer möglichst kugelförmigen Perle verrundet werden.

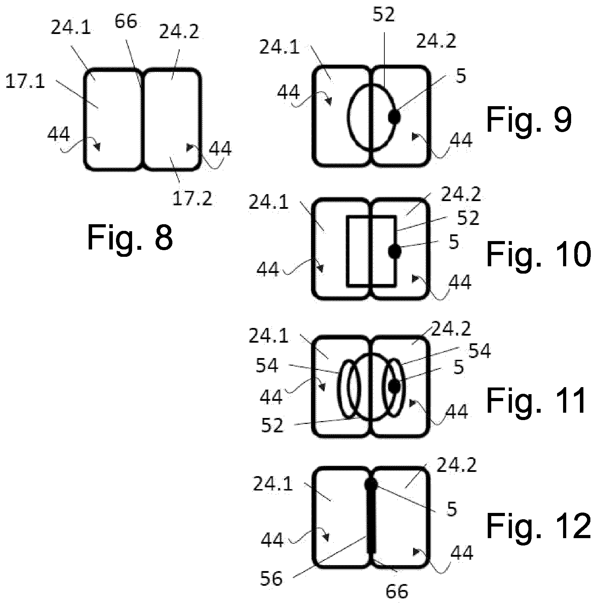

Mit dem Leiterendenschweißverfahren werden ein erstes Leiterende 24.1 aus Aluminium oder einer Aluminiumlegierung mit einem zweiten Leiterende 24.2 aus Aluminium oder einer Aluminiumlegierung verschweißt. Das erste und das zweite Leiterende 24.1, 24.2 liegen nebeneinander, so dass ihre Endflächen 44 im Wesentlichen in die gleiche Richtung zeigen. Eine Draufsicht auf die Endflächen 44 der Leiterenden 24.1, 24.2 ist beispielsweise in Fig. 8 dargestellt.

Das Leiterendenschweißverfahren hat die Schritte:
a) Fügen des ersten und zweiten Leiterendes 24.1, 24.2 mittels Schweißens mit einem Laserschweißstrahl 5 derart, dass sich an den Endflächen 44 des ersten und zweiten Leiterendes 24.1, 24.2 eine Schmelzmaterialansammlung 46 ausbildet, und
b) Nachbearbeiten der Schmelzmaterialansammlung 46 durch Abfahren der Schmelzmaterialansammlung 46 einschließlich deren Randbereichen 48 mittels eines Lasernachbearbeitungsstrahls 50 zur Nacherwärmung derart, dass die Oberfläche der Schmelzmaterialansammlung 46 durch eine sich darunter befindliche flüssige Schmelze oberflächenspannungsbedingt abgerundet wird.

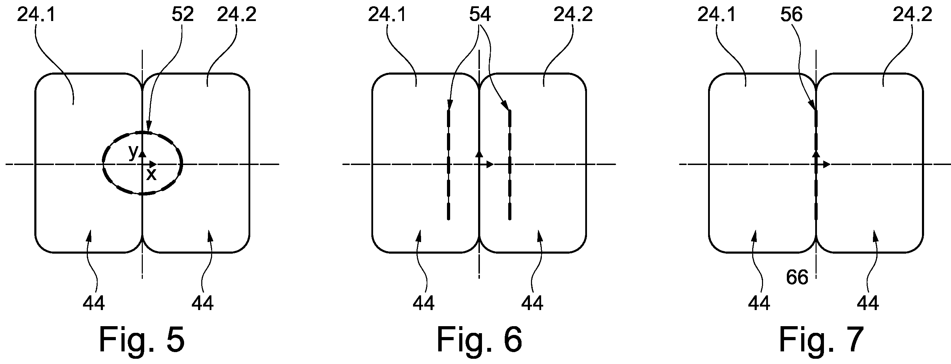

Beispiele, wie in einem vorgelagerten Schweißprozess zum Verbinden eines ersten Leiters mit einem zweiten Leiter vorgegangen wird, und insbesondere Beispiele für unterschiedliche Schweißstrategien und Schweißpfade 52, 54, 56 zum Durchführen des Schritts a) sind in den Fig. 5 bis 7 und in den Fig. 9 bis 12 dargestellt. Die Figuren zeigen unterschiedliche Formen von Schweißpfaden (geschlossener Schweißpfad 52, geteilter Schweißpfad 54, konzentrierter Schweißpfad 56). Insbesondere sind die Fig. 5 bis 7 und 9 bis 12 Darstellungen von möglichen Schweißkonturen für den Hauptprozess (Fügeprozess - Schritt a)). Bei einigen Ausführungsformen ist vorgesehen, dass eine oder mehrere dieser Formen im vorgelagerten Prozess geschweißt werden können.

In den Figuren 5, 9 und 10 ist eine Schweißstrategie gezeigt, bei der der Laserschweißstrahl 5 mittels der Scaneinrichtung 36 über einen geschlossenen Schweißpfad 52 geführt wird. Dabei kann die Geometrie des geschlossenen Schweißpfads 52 unterschiedlich sein; Fig. 5 und 9 zeigen beispielsweise eine Ellipse als Geometrie für den Schweißpfad 52, während Fig. 10 ein Rechteck als Geometrie für den geschlossenen Schweißpfad 52 zeigt.

Die Fig. 6 und 11 zeigen Beispiele für einen geteilten Schweißpfad 54, wobei ein Teil dieses geteilten Schweißpfads 54 auf der Endfläche 44 des ersten Leiterendes 24.1 liegt und ein anderer Teil des geteilten Schweißpfads 54 auf der Endfläche des zweiten Leiterendes 24.1 liegt. Die Teile des geteilten Schweißpfads 54 können unterschiedlich ausgebildet sein, beispielsweise linienförmig oder in geometrischen Formen wie z.B. eine Linienform oder auch eine oszillierende Form, beispielsweise Wellenform oder Zickzackform. Wie in Fig. 11 gezeigt, kann man auch einen geschlossenen Schweißpfad 52 mit einem geteilten Schweißpfad 54 kombinieren.

Insbesondere beim Ausführen der Schweißstrategien der Fig. 5, 6, 9 bis 11 entsteht als Schmelzmaterialansammlung 46 eine Schweißperle 58. Diese Schweißstrategie wird daher auch als Perlenschweißen bezeichnet.

Die Fig. 7 und 12 zeigen ein Beispiel für einen konzentrierten Schweißpfad 56. Der konzentrierte Schweißpfad 56 ist beispielsweise linienförmig oder linienförmig mit überlagerter Oszillation und erstreckt sich insbesondere entlang eines Spalts 62 zwischen den Endflächen des ersten und zweiten Leiterendes 24.1, 24.2. Dadurch wird bei einigen Ausführungsformen eine Schweißnaht 64 als Schmelzmaterialansammlung 46 gebildet. Diese Schweißstrategie wird daher auch als Spaltschweißen bezeichnet.

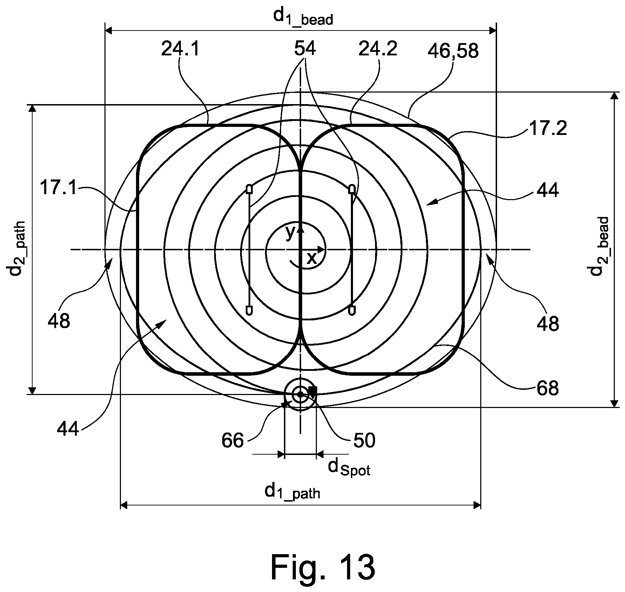

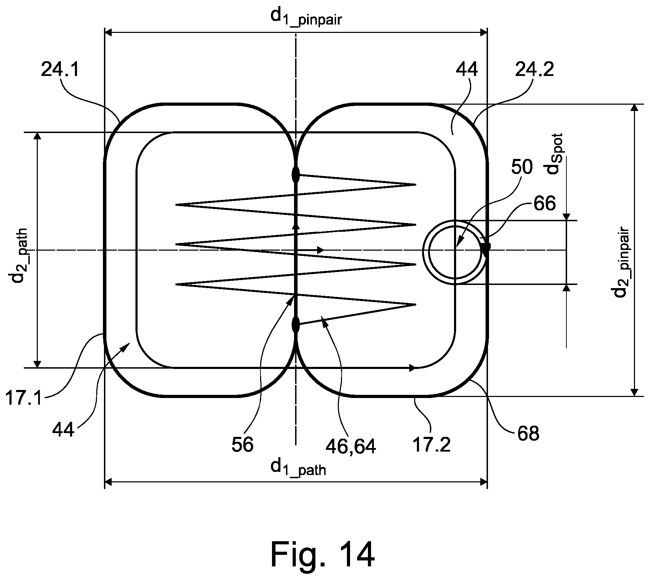

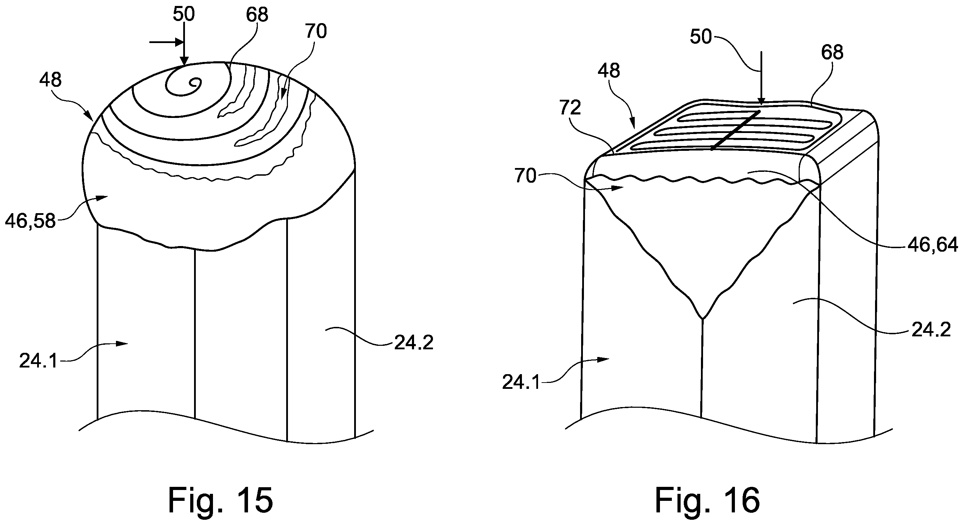

Unterschiedliche Beispiele zum Durchführen des Schritts b) sind in den Fig. 13 bis 16 illustriert. Dabei zeigen Fig. 13 und 15 ein Beispiel für ein Nachbearbeiten einer als Schweißperle 58 vorliegenden Schmelzmaterialansammlung 46 bei einem Perlenschweißen, während die Fig. 14 und 16 ein Beispiel für ein Nachbearbeiten einer als Schweißnaht 64 vorliegenden Schmelzmaterialansammlung 46 zeigt.

Insbesondere zeigen die Fig. 13 bis 16 beispielhafte Darstellungen von Konturen, die für den zu Nacharbeitsprozess gemäß Ausführungsformen der Erfindung verwendet werden könnten. Bahnen des Lasernachbearbeitungstrahls 50 können über die ursprünglichen Pinmaße hinaus gehen (Perlenaufbau/ Überhang nach Hauptprozess). Ziel ist, die Schweißung über die gesamte nach oben gerichtete Fläche der Schmelzmaterialansammlung 46 (insbesondere Schweißperle 58) zu verrunden.

In Fig. 13 sind ein Fokusbereich 66 (Laser spot) des Lasernachbearbeitungsstrahls 50 mit einem Fokusdurchmesser d_{Spot} (Beispiel für eine Ausdehnung d_{F} des Fokusbereichs 66), das Leiterendenpaar 24.1, 24.2 (Pinpair) und die Schweißperle 58 (Weld bead) mit ihren Dimensionen d_{1_bead} und d_{2_bead} in x- und y-Richtung (Beispiel für Ausdehnung dS der Schweißperle 58) sowie ein Beispiel für einen Nachbearbeitungspfad 68 (Welding path) gezeigt, der sich über die Schweißperle 58 erstreckt und der mit dem Lasernachbearbeitungsstrahl 50 abgefahren wird. Die äußere Konturgröße des Nachbearbeitungspfads 68 in x- und y-Richtung ist mit d1_path und d2_path bezeichnet. Fig. 15 zeigt die gleiche Situation wie Fig. 13 in perspektivischer Darstellung. Die in Fig. 13 und 15 zeigen einen Nachbearbeitungspfad 68 auf einer Perlenschweißung. Die hier gezeigte Nachbearbeitungsstrategie kommt insbesondere als Nachbearbeitung nach dem Fügen mit geschlossenem oder geteilten Schweißpfad 52, 54 zur Anwendung.

Bei einigen Ausführungsformen wird hierbei durch Verrundung eine im Wesentlichen kugelförmige oder ellipsoide Schweißperle 58 geformt; Ausbuchten, Zacken oder Schneidgrate, wie in den Fig. 19 bis 22 werden in die Verrundung eingearbeitet.

In Fig. 14 ist wiederrum der Fokusbereich 66 (Laser spot) des Lasernachbearbeitungsstrahls 50 mit dem Fokusdurchmesser d_{Spot} (Beispiel für die Ausdehnung d_{F} des Fokusbereichs 66), das Leiterendenpaar 24.1, 24.2 (Pinpair) mit seinen Dimensionen d_{1_pinpair} und d_{2_pinpair} in x- und y-Richtung, sowie ein Beispiel für den Nachbearbeitungspfad 68 (Welding path) bei Nahtschweißung gezeigt, der sich hier über die Schweißnaht 64 erstreckt und der mit dem Lasernachbearbeitungsstrahl 50 abgefahren wird. Die äußere Konturgröße des Nachbearbeitungspfads 68 in x- und y-Richtung ist auch hier mit d1_path und d2_path bezeichnet. Fig. 16 zeigt die gleiche Situation wie Fig. 14 in perspektivischer Darstellung. Die Fig. 14 und 16 zeigen insbesondere eine Skizze eines möglichen Nachbearbeitungspfads 68 bei einer Spaltschweißung. Diese Nachbearbeitungsstrategie kommt insbesondere beim Fügen mit einem konzentrierten Schweißpfad 56 zur Anwendung.

Bei einigen Ausführungsformen wird aus der Schmelzmaterialansammlung 46 hierbei ein kanten- und/oder eckenverrundeter Quader ausgebildet; auch hier werden Ausbuchtungen, Vorsprünge und Grate in die verrundete Form eingearbeitet. In Fig. 16 sind am Randbereich 48 die verrundeten Kanten 72 dargestellt.

Die Darstellungen der Fig. 15 und 16 sind eine vereinfachte schematische Darstellung von möglichen "Schweißpfaden" bei der Nachbearbeitung (hier Nachbearbeitungspfad 68 genannt). Entlang des "Schweißpfades" der Nacharbeitskontur wird die Oxidschicht lokal aufgebrochen, dazwischen können "Inseln" verbleiben. Je nach vorgelagertem Prozess ist der Ausgangszustand der Schweißperle unterschiedlich - in Fig. 15: Perlenschweißung ("geschlossener Pfad"/ "geteilter Pfad"), in Fig. 16: Spaltschweißung ("konzentrierter Pfad") -.

Bei einigen hier nicht näher dargestellten Ausführungen wird der Lasernachbearbeitungsstrahl 50 mit einer anderen Lasereinrichtung als die Lasereinrichtung 32 zum Erzeugen des Laserschweißstrahls 5 erzeugt, die aber ähnlich mit Optik und Scaneinrichtung aufgebaut ist. Bei bevorzugten Ausführungsformen, wie in Fig. 1 angedeutet, wird der Lasernachbearbeitungsstrahl 50 mit derselben Lasereinrichtung 32 wie der Laserschweißstrahl 5 erzeugt.

Durch gezieltes Führen einer Nachbearbeitungszone - in Fig. 13 und 14 als Fokusbereich 66 angedeutet - über die Oberfläche der Schmelzmaterialansammlung 46 wie insbesondere Schweißperle 58 oder Schweißnaht 64 wird die sich bei Aluminiummaterial ausbildende Oxidschicht 70 durch die direkte Interaktion des Keyholes aufgebrochen/ erweicht. Die darunterliegende Schmelze bekommt dadurch die Chance, sich in eine natürliche, oberflächenspannungsbedingte Verrundung zurückzubilden. Der Erstarrungsprozess wird durch die Nachbearbeitung verlängert. Vorprozessbedingte Anomalien wie die in Fig. 19 bis 21 gezeigten Freiformen, aber auch Schneidgrat werden vom Prozess erfasst und in die Schmelzmaterialansammlung eingearbeitet. Das gezielte Führen kann dabei in unterschiedlichsten Formen von Nachbearbeitungspfaden 68 erfolgen wie beispielsweise: gerade, rechteckförmig, bogenförmig, elliptisch, spiralförmig, alle Formen von Oszillationsbewegungen oder auch in Form einer Beschriftung.

Für das Nachwärmen/ Oxidschichtbrechen wird vorzugsweise beim Lasernachbearbeitungsstrahl 50 eine geringere Laserleistung und/oder höhere Fokusgeschwindigkeiten als beim Laserschweißstrahl 5 verwendet. Die Laserleistung kann zwischen 0,2 und 10kW, bevorzugt 0,5 bis 5kW betragen und sowohl statisch als auch mit einer Rampenstrategie angewendet werden. Die Fokusgeschwindigkeit kann zwischen 50 und 3000 mm/s betragen, bevorzugt 300 bis 1500mm/s. Maßgebliche Größe für den Energieeintrag ist die Steckenenergie. Diese ist bei einigen Ausführungsformen im Vergleich zur Maximalleistung des Hauptprozesses (d.h. des Laserschweißstrahls 5) mindestens um den Faktor 2 geringer und beträgt zwischen 0,5 und 5 J/mm, bevorzugt zwischen 1,5 und 3,5 J/mm. Die Nachbearbeitung kann auch defokusiert in einer Fokuslage zwischen -20 und +20mm, bevorzugt in der Fokusebene, angewendet werden.

Wie man den Fig. 13 und 14 entnehmen kann, beträgt die äußere Konturgröße des Nachbearbeitungspfads 68 zwischen dem 0,5- und 1,5-fachem der Außenmaße d_{1_pinpair}, d_{2_pinpair} des Pinpaares, bevorzugt 0,8 bis 1,2-fach. Bei einer Perlenschweißung, wie in Fig. 13 gezeigt, wird die äußere Konturgröße des Nachbearbeitungspfads begrenzt durch die Größe d_{1_bead}, d_{2_bead} der Schweißperle 58 nach dem Hauptschweißvorgang.

Bei einer lokalen Schweißung in der Fügeebene ("Spaltschweißung"), wie in Fig. 14 gezeigt, ergibt sich das maximale Limit für das Ausmaß d_{V} der Verrundungskontur (=maximales Ausmaß der verrundeten Oberfläche) durch d_{V}=d_{P} - d_{F}, wobei d_{P} die Ausdehnung des Paars aus erstem und zweitem Leiterende 24.1, 24.2 und d_{F} die Ausdehnung des Fokus des Lasernachbearbeitungsstrahls 50 ist.

Für Hauptschweißvorgänge, die eine Perle ausbilden, wie in Fig. 13 gezeigt, lässt sich dieses Limit durch d_{V}=d_{S} - d_{F} berechnen, wobei d_{S} die Ausdehnung der Schweißperle und d_{F} die Ausdehnung des Fokus des Lasernachbearbeitungsstrahls ist.

Für rechteckige Pinpaare ergeben sich abhängig der jeweiligen Aspektverhältnisse rechteckige bzw. elliptische Verrundungskonturen. Die Energie kann sowohl gepulst als auch durch einen kontinuierlichen Eintrag eingebracht werden. Es kann auch eine Strahlformung (Aufteilung der Laserleistung in z.B. Kern und Ring) statisch und dynamisch zum Einsatz kommen.

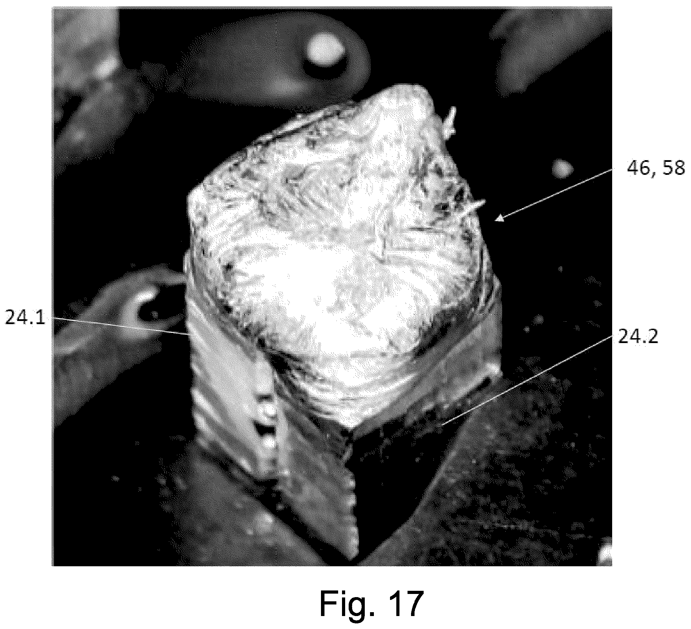

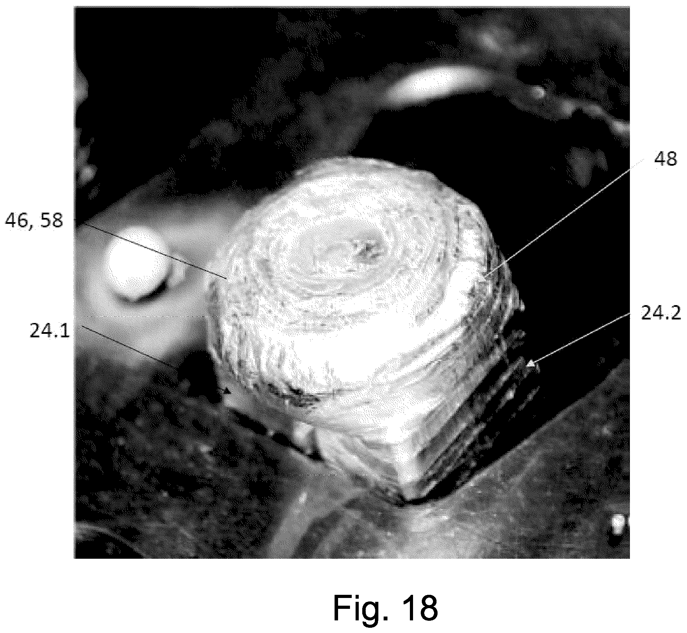

Die Fig. 17 zeigt eine Perlenschweißung ohne Nachbearbeitung gemäß Schritt b); und die Fig. 18 zeigt eine Perlenschweißung mit Nachbearbeitung gemäß Schritt b). Die Basisparameter sind dabei jeweils dieselben. Die Fig. 17 und 18 zeigen somit ein Schweißergebnis mit und ohne Nachwärmen.

Nach Verschweißen eines Leiterendenpaares wird das Leiterendenschweißverfahren an allen zu verschweißenden Leiterendenpaaren der Leiterendenanordnung 42 wiederholt, um durch Verbindung der Hairpins 17 die Spulenwicklung des Stators 8 zu bilden. Wie man Fig. 3 entnehmen kann, kann man dadurch wesentlich besser die geforderten Luft- und Kriechstrecken zwischen den Leiterendenpaaren einhalten. Da das Risiko von Schweißfehlern minimiert ist, kann man auch bei Verwendung von Alu-Leitern die Abstände zwischen verschweißten Leiterendenpaaren minimieren und so einen leichten und kompakten und leistungsdichten und gleichzeitig kostengünstigen E-Antrieb erhalten.

Um ein kompaktes, leichtes und dennoch leistungsstarkes und zuverlässiges Bauteil Bauteil (26) einer elektrischen Maschine - wie insbesondere einen Hairpin-Stator - zu erhalten, schafft die Erfindung ein im Zuge der Großserienherstellung des Bauteils (26) durchzuführendes Leiterendenschweißverfahren zum Verschweißen eines ersten Leiterendes (24.1) aus Aluminium oder einer Aluminiumlegierung mit einem zweiten Leiterende (24.1) aus Aluminium oder einer Aluminiumlegierung, wobei das erste und das zweite Leiterende (24.1, 24.2) nebeneinanderliegen, so dass ihre Endflächen (44) im Wesentlichen in die gleiche Richtung zeigen, wobei das Leiterendenschweißverfahren die Schritte umfasst:
a) Fügen des ersten und zweiten Leiterendes (24.1, 24.2) mittels Schweißens mit einem Laserschweißstrahl (5) derart, dass sich an den Endflächen (44) des ersten und zweiten Leiterendes (24.1, 24.2) eine Schmelzmaterialansammlung (46) ausbildet, und
b) Nachbearbeiten der Schmelzmaterialansammlung (46) durch Abfahren der Schmelzmaterialansammlung (46) einschließlich deren Randbereichen (48) mittels eines

Lasernachbearbeitungsstrahls (50) zur Nacherwärmung derart, dass die Oberfläche der Schmelzmaterialansammlung (46) durch eine sich darunter befindliche flüssige Schmelze oberflächenspannungsbedingt abgerundet wird.

### Bezugszeichenliste:

- 1: Lichtleitkabel
- 2: Laseroptik
- 3: Ringlicht
- 4: Lichtkegel
- 5: Laserschweißstrahl
- 6: Absaugung
- 7: Spannvorrichtung
- 8: Stator
- 10: Blechpaket
- 12: Nut
- 17: Hairpin
- 17.1: erster Hairpin
- 17.2: zweiter Hairpin
- 20: Steuerung
- 22: Leiterendenschweißvorrichtung
- 24: Leiterende
- 24.1: erstes Leiterende
- 24.2: zweites Leiterende
- 26: Bauteil
- 28: Beleuchtungseinrichtung
- 30: Erfassungseinrichtung
- 32: Lasereinrichtung
- 34: Halterung
- 36: Scaneinrichtung
- 38: Auswerteeinrichtung
- 40: Achse
- 42: Leiterendenanordnung
- 44: Endfläche
- 46: Schmelzmaterialansammlung
- 48: Randbereich der Schmelzmaterialansammlung
- 50: Lasernachbearbeitungsstrahl
- 52: geschlossener Schweißpfad
- 54: geteilter Schweißpfad
- 56: konzentrierter Schweißpfad
- 58: Schweißperle
- 60: Positionsbestimmungseinrichtung
- 62: Spalt
- 64: Schweißnaht
- 66: Fokusbereich
- 68: Nachbearbeitungspfad
- 70: Oxidschicht
- 72: verrundete Kanten

## Patentansprüche

1. Im Zug der Herstellung eines Bauteils (26) einer elektrischen Maschine durchzuführendes Leiterendenschweißverfahren zum Verschweißen eines ersten Leiterendes (24.1) aus Aluminium oder einer Aluminiumlegierung mit einem zweiten Leiterende (24.1) aus Aluminium oder einer Aluminiumlegierung, wobei das erste und das zweite Leiterende (24.1, 24.2) nebeneinanderliegen, so dass ihre Endflächen (44) im Wesentlichen in die gleiche Richtung zeigen, umfassend:
a) Fügen des ersten und zweiten Leiterendes (24.1, 24.2) mittels Schweißens mit einem Laserschweißstrahl (5) derart, dass sich an den Endflächen (44) des ersten und zweiten Leiterendes (24.1, 24.2) eine Schmelzmaterialansammlung (46) ausbildet, und
b) Nachbearbeiten der Schmelzmaterialansammlung (46) durch Abfahren der Schmelzmaterialansammlung (46) einschließlich deren Randbereichen (48) mittels eines Lasernachbearbeitungsstrahls (50) zur Nacherwärmung derart, dass die Oberfläche der Schmelzmaterialansammlung (46) durch eine sich darunter befindliche flüssige Schmelze oberflächenspannungsbedingt abgerundet wird.

2. Leiterendenschweißverfahren nach Anspruch 1, **dadurch gekennzeichnet,**
**dass** Schritt a) wenigstens einen oder mehrere der Schritte umfasst:
a1) Bilden einer Schweißperle (58) als Schmelzmaterialansammlung (46), die sich über die Endflächen (44) des ersten und zweiten Leiterendes (24.1, 24.2) erstreckt;
a2) Bilden einer Schweißnaht (64) als Schmelzmaterialansammlung (46) im Übergangsbereich zwischen dem ersten und zweiten Leiterende (24.1, 24.2);
a3) Abfahren eines geschlossenen Schweißpfads (52), der sich über die Endflächen (44) des ersten und zweiten Leiterendes (24.1, 24.2) erstreckt, mittels des Laserschweißstrahls (5);
a4) Abfahren eines geteilten Schweißpfads (54), von dem ein Teil sich auf der Endfläche (44) des ersten Leiterendes (24.1) und ein anderer Teil sich auf der Endfläche (44) des zweiten Leiterendes (24.2) befindet, mittels des Laserschweißstrahls (5);
a5) Abfahren eines konzentrierten Schweißpfads (56) entlang eines Spalts (66) zwischen den Endflächen (44) des ersten und zweiten Leiterendes (24.1, 24.2) mittels des Laserschweißstrahls (5);
a6) Abfahren eines elliptischen oder rechteckförmigen Schweißpfads;
a7) Abfahren eines linienförmigen Schweißpfads;
a8) Abfahren eines oszillierenden Schweißpfads.

3. Leiterendenschweißverfahren nach einem der voranstehenden Ansprüche, **dadurch gekennzeichnet,**
**dass** Schritt b) wenigstens einen oder mehrere der Schritte enthält:
b1a) gezieltes Führen eines Fokusbereichs (66) des Lasernachbearbeitungsstrahls (50) über die Oberfläche der Schmelzmaterialansammlung, um eine Oxidschicht (70) aufzubrechen und/oder zu erweichen, so dass die darunterliegende Schmelze sich in eine oberflächenspannungsbedingte Verrundung zurückzubilden kann;
b1b) Verlängerung eines Erstarrungsprozesses der Schmelzmaterialansammlung (46) durch die Nachbearbeitung;
b1c) Rückbilden von Vorsprüngen und/oder von Schneidgraten und Einarbeiten des Materials davon in eine abgerundete Form der Schmelzmaterialansammlung (46);
b1d) Abfahren der Schmelzmaterialansammlung (46) mittels des Lasernachbearbeitungsstrahls (50) auf einem Nachbearbeitungspfad (68), der einen geraden, rechteckförmigen, bogenförmigen, elliptischen, spiralförmigen, oszillierenden Verlauf, die Form einer Beschriftung oder einen aus einer Kombination einer oder mehrerer der vorerwähnten Verläufe und Formen gebildeten Verlauf hat;
b1e) Verrundung der Schweißung über die gesamte nach oben gerichtete Fläche der Schweißmaterialansammlung (46), insbesondere einer Schweißperle (58), insbesondere im Randbereich (48) der Schweißmaterialansammlung (46);
b1f) Ausbilden einer im Wesentlichen kugelförmigen oder ellipsoiden Schweißperle (58) aus der Schmelzmaterialansammlung (46);
b1g) Ausbilden eines kanten- und eckenverrundeten Quaders, insbesondere bei konzentrierten Schweißpfaden.

4. Leiterendenschweißverfahren nach einem der voranstehenden Ansprüche, **dadurch gekennzeichnet,**
**dass** Schritt b) wenigstens einen oder mehrere der folgenden Schritte umfasst:
b2a) Verwenden einer Laserleistung für den Lasernachbearbeitungsstrahl (50), die geringer als die Laserleistung des Laserschweißstrahls (5) ist;
b2b) Verwenden einer Fokusgeschwindigkeit für den Lasernachbearbeitungsstrahl (50), die höher als die Fokusgeschwindigkeit des Laserschweißstrahls (5) ist;
b2c) Erzeugen des Lasernachbearbeitungsstrahls (50) mit dem Laser, mit dem im Schritt a) der Laserschweißstrahl (5) erzeugt worden ist;
b2d) Erzeugen des Lasernachbearbeitungsstrahls (50) mit einer Laserleistung von 0,2 bis 10kW, bevorzugt 0,5 bis 5kW;
b2e) Erzeugen des Lasernachbearbeitungsstrahls (50) mit einer gleichbleibenden Laserleistung oder mit einer zu Beginn ansteigenden und/oder zum Ende abfallenden Laserleistung;
b2f) Abfahren der Schmelzmaterialansammlung (46) mit einer Fokusgeschwindigkeit im Bereich von einschließlich 50 bis 3000 mm/s, bevorzugt einschließlich 300 bis 1500mm/s;

5. Leiterendenschweißverfahren nach einem der voranstehenden Ansprüche, **dadurch gekennzeichnet,**
**dass** Schritt b) wenigstens einen oder mehrere der folgenden Schritte umfasst:
b3a) Eintragen einer Energie pro Strecke mit dem Lasernachbearbeitungsstrahl (50), die im Vergleich zum Eintrag der Energie pro Strecke mit dem Laserschweißstrahl (5) um mindestens den Faktor zwei geringer ist;
b3b) Eintragen einer Energie pro Strecke mit dem Lasernachbearbeitungsstrahl (50) im Bereich von einschließlich 0,5 bis 5 J/mm, bevorzugt im Bereich von einschließlich 1,5 bis 3,5 J/mm;
b3c) Abfahren der Schmelzmaterialansammlung (46) mit defokusiertem Lasernachbearbeitungsstrahl (50) in einer Fokuslage zwischen einschließlich -20 und +20mm, bevorzugt in der Fokusebene.

6. Leiterendenschweißverfahren nach einem der voranstehenden Ansprüche, **dadurch gekennzeichnet,**
**dass** Schritt b) wenigstens einen oder mehrere der Schritte umfasst:
b4a) Abfahren der Schmelzmaterialansammlung (46) auf einem Nacharbeitspfad (68), dessen äußere Konturgröße zwischen dem einschließlich 0,5fachen bis 1,5fachen, bevorzugt zwischen einschließlich dem 0,8fachen bis 1,2fachen der Außenmaße des Paares aus erstem und zweitem Leiterende (24.1, 24.2) beträgt;
b4b) Abfahren der Schmelzmaterialansammlung (46) auf einem Nacharbeitspfad (68), dessen äußere Konturgröße durch die Größe einer Schmelzperle (58) als Schmelzmaterialansammlung (46) begrenzt wird;
b4c) Erzeugen einer verrundeten Oberfläche für eine Schweißnaht (64) im Übergangsbereich des ersten und zweiten Leiterendes (24.1, 24.2) als Schmelzmaterialansammlung (46), wobei für die maximale Ausdehnung d_{V} der verrundeten Oberfläche gilt:
d_{V} = d_{P}-d_{F}, wobei d_{P} die Ausdehnung des Paars aus erstem und zweitem Leiterende (24.1, 24.2) und d_{F} die Ausdehnung des Fokus des Lasernachbearbeitungsstrahls (50) ist;
b4d) Erzeugen einer verrundeten Oberfläche einer Schweißperle (58) als Schmelzmaterialansammlung (46), wobei für die maximale Ausdehnung d_{V} der verrundeten Oberfläche gilt:
d_{V} = d_{S}-d_{F}, wobei d_{S} die Ausdehnung der Schweißperle (58) und d_{F} die Ausdehnung des Fokus des Lasernachbearbeitungsstrahls (50) ist;
b4e) Erzeugen einer rechteckigen oder einer elliptischen abgerundeten Oberfläche an einem Leiterendenpaar, dessen Endflächen (44) zusammen eine rechteckige Form ergeben;
b4f) kontinuierliches oder gepulstes Einbringen der Nachbearbeitungsenergie;
b4g) Verwenden einer statischen oder dynamischen Strahlformung, mit der der Laserstrahl zum Nachbearbeiten aufgeteilt wird, wie insbesondere in Kern und Ring.

7. Leiterendenschweißverfahren nach einem der voranstehenden Ansprüche, **dadurch gekennzeichnet,**
**dass** Schritt b) mit oder ohne Unterbrechung nach Schritt a) in noch flüssiger Schmelze erfolgt.

8. Herstellverfahren zum Herstellen eines Hairpin-Stators (8), umfassend:
Bereitstellen eines Statorblechpakets (10) mit darin eingefügten Hairpin-Leiterabschnitten (17, 17.1, 17.2), deren Leiterenden (24.1, 24.2) paarweise nebeneinander angeordnet sind, um durch Verschweißen der Leiterenden (24.1, 24.2) eine Spulenwicklung des Hairpin-Stators (8) zu bilden und
Verschweißen der Leiterenden (24.1, 24.2) durch Durchführen des Leiterendenschweißverfahrens nach einem der voranstehenden Ansprüche.

9. Leiterendenschweißvorrichtung (22) zum Verschweißen eines ersten Leiterendes (24.1) aus Aluminium oder einer Aluminiumlegierung mit einem zweiten Leiterende (24.2) aus Aluminium oder einer Aluminiumlegierung, wobei das erste und das zweite Leiterende (24.1,24.2) nebeneinanderliegen, so dass ihre Endflächen (44) im Wesentlichen in die gleiche Richtung zeigen, wobei die Leiterendenschweißvorrichtung (22) wenigstens eine Laserstrahlquelle (32) zum gezielten Richten eines Laserstrahls (5, 50) auf die Endflächen (44) des ersten und zweiten Leiterendes (24.1, 24.2) und eine Steuerung (20) aufweist, die dazu ausgebildet ist, die Leiterendenschweißvorrichtung (22) zum Durchführen des Verfahrens nach einem der Ansprüche 1 bis 7 zu steuern.

10. Herstellanlage zur industriellen Serienherstellung von Hairpin-Statoren (8), umfassend eine Leiterendenschweißvorrichtung (22) nach Anspruch 9.

11. Computerprogramm, umfassend Anweisungen, die eine Leiterendenschweißvorrichtung (22) nach Anspruch 9 dazu veranlassen, das Leiterendenschweißverfahren nach einem der Ansprüche 1 bis 7 durchzuführen, oder die eine Herstellanlage nach Anspruch 10 dazu veranlassen, das Herstellverfahren nach Anspruch 8 durchzuführen.
